# FASCICULE DE BREVET EUROPEEN

(11) **EP 3 969 788 B1**
(45) Date de publication et mention de la délivrance du brevet: **18.10.2023**
(21) Numéro de dépôt: 20723029.3
(22) Date de dépôt: 21.04.2020
(51) Int. Cl.: F16H 61/10, F16H 61/16, F16H 61/02

(54) **PROCÉDÉ DE SUPPRESSION DU POMPAGE D'UNE TRANSMISSION AUTOMATIQUE**
VERFAHREN ZUR VERMEIDUNG VON SCHWINGUNG IN EINEM AUTOMATIKGETRIEBE
METHOD FOR ELIMINATING HUNTING IN AN AUTOMATIC TRANSMISSION

(30) Priorité: 14.05.2019 FR 1904992
(43) Date de publication de la demande: 23.03.2022
(73) Titulaire: Renault s.a.s, 92100 Boulogne Billancourt (FR)
(72) Inventeur: LEFEVRE, Aurelien, 92340 Bourg la Reine (FR)
(74) Mandataire: Renault Group
(86) Numéro de dépôt international: PCT/EP2020/061092
(87) Numéro de publication internationale: WO 2020/229104

(56) Documents cités:
- EP-A2- 1 344 963
- DE-A1- 19 624 061
- FR-A1- 2 737 761
- US-A- 5 474 507

## Description

La présente invention se rapporte au domaine des transmissions automatiques à rapports discrets sur un véhicule thermique hybride, ou électrique.

Plus précisément, elle a pour objet un procédé de suppression du pompage d'une transmission automatique de groupe motopropulseur de véhicule.

Lors des phases de changement de rapport, les transmissions automatiques peuvent passer par un rapport transitoire ne permettant pas, ou peu, de transmettre un couple de traction à la roue. Dès lors que tout ou partie du couple de traction requis ne peut pas être transmis à la roue, la dynamique du véhicule est soumise directement aux efforts résistifs appliqués au véhicule, dans les conditions d'environnement rencontrées.

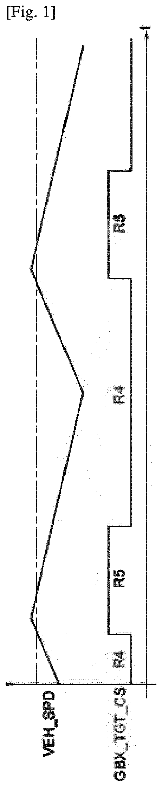

Si ces efforts sont élevés (cas d'une route à forte inclinaison, vent fort, etc.), et qu'une phase transitoire de changement de rapport a lieu sans transmission de couple à la roue, la vitesse du véhicule peut diminuer au point de se retrouver en dessous de la vitesse ayant impliquée le changement de rapport initial. La consigne de rapport peut alors requérir le retour de la transmission sur le rapport initial, en impliquant un nouveau changement de rapport et une nouvelle décélération du véhicule. La répétition de ces changements aboutit à un phénomène d'oscillation de la transmission entre deux rapports, bien connu sous le terme de pompage, qui pénalise le véhicule en termes d'agrément et de performance. Ce phénomène est illustré par la figure 1, où *VEH_SPEED* est la vitesse de déplacement du véhicule et *GBX_TGT_CS* le rapport cible de la transmission automatique. La figure montre le lien entre les phases d'accélération et de décélération, et l'oscillation de la boîte entre son quatrième et son cinquième rapport, R4 et R5.

Par la publication FR 2 737 761, on connaît une première méthode de suppression du phénomène de pompage d'une transmission automatique. Selon ce procédé, les changements de rapport montants (N vers N+1) sont interdits, si le rapport prévu ne permet pas d'appliquer suffisamment de couple aux roues pour conserver la vitesse du véhicule, ou pour garantir une accélération suffisante sur le rapport N+1.

Cette méthode permet d'éviter l'apparition de pompage, à la suite du passage d'un « *mauvais* » rapport de transmission. Toutefois, une fois que le changement de rapport est engagé, on ne remet plus en cause sa réalisation. La publication EP 1 344 963 divulgue une autre méthode de suppression du phénomène de pompage.

La présente invention a pour but d'interdire un retour au rapport initial, en cas de perte de vitesse du véhicule par baisse de sa capacité d'accélération pendant la réalisation d'un changement de rapport, ou d'état de la chaîne cinématique.

Dans ce but, elle propose d'imposer à la transmission une consigne d'état, qui peut être figée sur une cible, en lui appliquant :
- une première requête de figeage au cours de la réalisation de cette consigne par la transmission, si la vitesse de déplacement du véhicule diminue pendant cette réalisation, alors que le niveau de performance requis au groupe motopropulseur est supérieur à un seuil défini, ou
- par une deuxième requête de figeage à la fin de la réalisation de la consigne, si la vitesse de déplacement du véhicule à cet instant est inférieure à sa vitesse de déplacement lors du changement initial de la consigne, et que le niveau de performance requis au groupe motopropulseur est toujours supérieur à un seuil défini.

La présente invention sera mieux comprise à la lecture de la description suivante d'un mode de réalisation non limitatif de celle-ci, en se reportant aux dessins annexés, sur lesquels :
[fig.1] est un chronogramme illustrant le phénomène de pompage en cours de passage.
[fig.2] est un logigramme de la stratégie proposée.
[fig.3] est un chronogramme illustrant l'application du procédé.

Le procédé de suppression du pompage d'une transmission automatique de GMP de véhicule faisant l'objet de l'invention, repose sur l'introduction dans le contrôle de la transmission, de requêtes de figeage de la consigne d'état imposée à la chaîne cinématique. Chaque état de la chaîne cinématique peut être défini comme une combinaison de coupleurs et de réducteurs spécifiques. La requête de figeage de consigne d'état, s'impose alors à la réalisation de certains changements, afin d'éviter un éventuel pompage de la transmission autour d'un état de la chaîne cinématique.

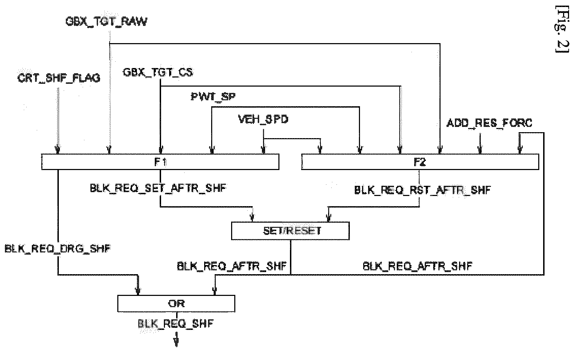

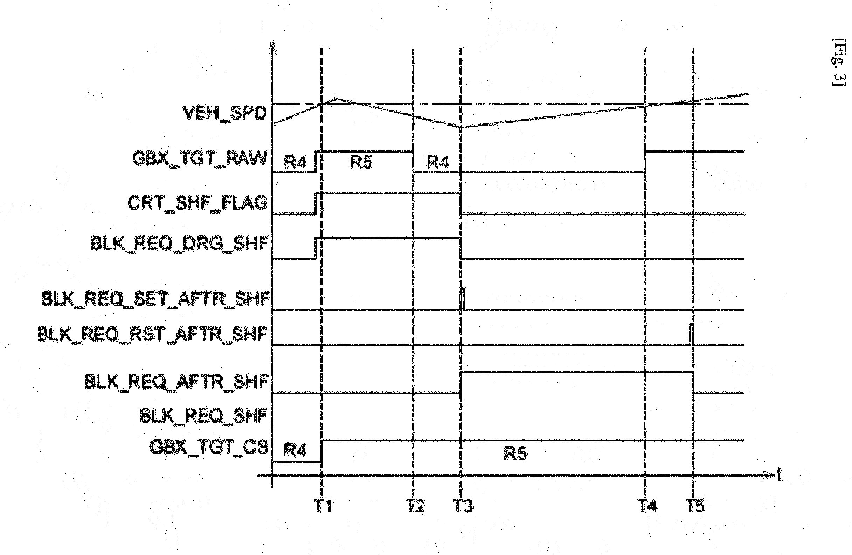

Le procédé illustré par les figures 2 et 3, se base sur les données suivantes :
- *GBX_TGT_RAW*, est la consigne d'état de la chaîne cinématique, avant l'application de la requête de figeage ;
- *GBX_TGT_CS,* est la consigne d'état de la chaîne cinématique après l'application de la requête de figeage, qui est donc réalisée par la transmission ;
- *CRT_SHF_FLAG* est un booléen d'état prenant la valeur 1 si un changement d'état est en cours, et la valeur 0, si aucun changement n'est en cours ;
- *VEH_SPD* est la vitesse de déplacement du véhicule ;
- *PWT_SP* est le niveau de performance requis en couple au groupe motopropulseur (GMP), compris entre une limite basse à la valeur 0 et une limite haute à la valeur 1 ;
- *ADD_RES_FORC* est le niveau de force résistive additionnelle représentant les forces résistives appliquées au véhicule dans les conditions de roulages courantes, en plus de la force résistive théorique observée sur le plat, sans vent, avec une masse véhicule moyenne, etc.

La première fonction F1 de la figure 2, permet d'élaborer les deux requêtes suivantes
- une première requête *BLK_REQ_DRG_SHF,* qui est une requête de figeage en cours de réalisation d'un état cible *GBX_TGT_CS*, par la transmission, et
- une deuxième requête *BLK_REQ_SET_AFTR_SHF*, qui est une requête d'initialisation de figeage après réalisation de l'état cible GBX_TGT_CS, par la transmission.

La première requête de figeage *BLK_REQ_DRG_SHF*, est effective dans le cas où la cible d'état de la chaîne cinématique *GBX_TGT_CS* évolue et où le niveau de performance *PWT_SP* requis sur le GMP est suffisamment élevé pour signifier un désir d'accélération du véhicule, en dépassant un seuil *PWT_SP_THD,* qui implique la réalisation de cet état.

Cette première requête de figeage, a pour objectif de figer la valeur de l'état cible *GBX_TGT_CS* dans le cas où la vitesse diminuerait par un manque de couple traction pendant le changement, induisant un changement probable de la cible de la transmission vers sa valeur précédente. Elle est effective tout au long du changement d'état, tant que le niveau de performance *PWT_SP* requis au GMP, est supérieur au seuil de performance défini *PWT_SP*_*THD.*

Le changement d'état est signifié à la transmission par l'information, *CRT_SHF_FLAG*, qui est construite par une stratégie logicielle distincte, propre à celle-ci. Ce signal est maintenu tant que le niveau de performance requis *PWT_SP* est supérieur au seuil *PWT_SP_THD.* Si au contraire, le niveau de performance requis *PWT_SP* devient inférieur à *PWT_SP_THD,* la requête de figeage *BLK_REQ_DRG_SHF* est désactivée, car le désir d'accélération du véhicule n'est plus vérifié. Dans cette situation, une diminution de la vitesse véhicule est considérée comme normale, et attendue. La requête de figeage globale *BLK_REQ_SHF* est alors directement égale à celle de la première phase de figeage, définie par *BLK_REQ_DRG_SHF.*

La deuxième requête de figeage *BLK_REQ_AFTR_SHF,* intervient après un changement d'état. Elle est initialisée par la requête *BLK_REQ_SET_AFTR_SHF,* si l'ensemble des conditions suivantes sont vérifiés :
- une requête de figeage pendant la réalisation de l'état cible *BLK_REQ_DRG_SHF* est encore active à la fin de la réalisation,
- le niveau de performance requis *PWT_SP* est toujours supérieur au seuil *PWT_SP_THD,* indiquant ainsi le maintien d'un désir d'accélération,
- la vitesse du véhicule *VEH_SPD* à la fin de la réalisation de l'état cible *GBX_TGT_CS* (détectable par l'état de l'information *CRT_SHF_FLAG*) est inférieure à la vitesse véhicule observée au moment du changement initial de la consigne d'état chaîne cinématique *GBX_TGT_CS*, ce qui signifie que le véhicule a décéléré pendant la réalisation de cet état, et
- la consigne d'état cible *GBX_TGT_CS* est différente de la consigne d'état de la chaîne cinématique avant figeage *GBX_TGT_RAW.*

La deuxième requête de figeage *BLK_REQ_AFTR_SHF* est donc effective, si à la fois :
- une première requête de figeage pendant la réalisation de l'état cible est encore active à la fin de la réalisation de la consigne,
- le niveau de performance requis est toujours supérieur au seuil défini, et
   - la vitesse du véhicule à la fin de la réalisation de l'état cible est inférieure à la vitesse véhicule observée au moment du changement initial de la consigne d'état chaîne cinématique, et celle-ci est différente de la consigne d'état de la chaîne cinématique avant figeage.

La réunion de ces conditions montre en effet, qu'en dépit d'un désir d'accélération du véhicule, ce dernier a décéléré pendant la réalisation de l'état ciblé *GBX_TGT_CS,* et qu'un figeage de cette consigne est nécessaire pour éviter un retour sur la consigne initiale *GBX_TGT_RAW,* qui introduirait le pompage de la transmission par oscillation entre l'état courant et l'état cible.

La deuxième requête de figeage *BLK_REQ_AFTR_SHF,* est initialisée par une requête spécifique *BLK_REQ_SET_AFTR_SHF* après un changement d'état, si l'ensemble des conditions sont remplies. Elle permet une ré-accélération du véhicule, en vue de retrouver la concordance entre la consigne d'état réalisé par la transmission *GBX_TGT_*CS et la consigne d'état avant blocage *GBX_TGT_RAW.* Dans cette situation, le pompage de la transmission entre l'état initial et l'état ciblé n'est plus possible, même sans figeage de l'état. La requête de figeage globale *BLK_REQ_SHF* est alors directement égale à celle de la deuxième phase de figeage définie par *BLK_REQ_AFTR_SHF.*

En résumé, l'invention prévoit qu'une consigne d'état imposée à la transmission, peut être figée sur une cible :
- par une première requête au cours de la réalisation de cette consigne par la transmission, si la vitesse de déplacement du véhicule diminue pendant cette réalisation, alors que le niveau de performance requis au groupe motopropulseur est supérieur à un seuil défini, ou
- par une deuxième requête à la fin de la réalisation de la consigne, si la vitesse de déplacement du véhicule à cet instant est inférieure à sa vitesse de déplacement lors du changement initial de la consigne, et que le niveau de performance requis au groupe motopropulseur est toujours supérieur à un seuil défini.

La deuxième fonction F2, a pour but de définir l'arrêt de la requête de figeage d'après changement *BLK_REQ_AFTR_SHF,* par une requête de désactivation :
*BLK_REQ_RST_AFTR_SHF,* qui devient effective dès qu'au moins une des conditions suivantes est satisfaite :
- 'état avant figeage *GBX_TGT_RAW* est le même que l'état réalisé *GBX_TGT_CS,* ce qui signifie que le véhicule a pu réaccélérer, et que le phénomène de pompage ne peut plus avoir lieu ;
- la différence entre la vitesse du véhicule *VEH_SPD* et la vitesse du véhicule observée au moment de l'initialisation de la requête de blocage après changement *BLK_REQ_AFTR_SFH,* devient inférieure à un seuil défini *VEH_SPD_THD*, ce qui signifie que le véhicule a continué à décélérer après réalisation de la cible *GBX_TGT_CS* en raison d'une trop faible capacité d'accélération du véhicule sur celui-ci ;
- la durée de la seconde phase de blocage devient supérieure à un seuil qui est fonction de la vitesse véhicule *VEH_SPD* et du niveau des efforts résistifs additionnels *ADD_RES_FORC*, ce qui signifie que le véhicule n'a pas pu réaccélérer suffisamment après la réalisation de la cible *GBX_TGT_CS* dans la durée normalement nécessaire ;
- le niveau de performance requis *PWT_SP* devient inférieur à *PWT_SP_THD, car la* demande d'accélération a disparu, et une diminution de la vitesse de déplacement est normale.

En résumé, le figeage de la cible peut être interrompu par une requête de désactivation, qui devient effective après la réalisation de la consigne (fin du changement d'état) dès qu'au moins une des conditions suivantes est satisfaite :
- la cible d'état avant figeage est la même que l'état réalisé,
- la différence entre la vitesse du véhicule et la vitesse du véhicule observée au moment de l'initialisation de la requête de blocage après changement, devient inférieure à un seuil défini,
- la durée de la seconde phase de blocage devient supérieure à un seuil qui est fonction de la vitesse véhicule et du niveau des efforts résistifs additionnels, ou
- le niveau de performance requis devient inférieur au seuil défini.

Dans ces circonstances, la requête de figeage globale *BLK_REQ_SHF* est toujours directement égale à celle de la deuxième phase de figeage définie par *BLK_REQ_AFTR_SHF.*

Cette méthode permet d'élaborer une requête de figeage de la consigne d'état cible de la transmission est élaborée, grâce à laquelle, le pompage de la transmission est évité, ce qui apporte un gain d'agrément et de performances important.

Sur la figure 3, on a superposé l'évolution dans le temps des différents signaux et paramètres, de bas en haut :
*GBX_TGT_CS* : cible (consigne d'état) après application de la requête de figeage,
*BLK_REQ_SHF* : requête de figeage globale,
*BLK_REQ_AFTR_SHF* : deuxième requête de figeage,
*BLK_REQ_RST_AFTR_SHF* : requête d'arrêt de la deuxième requête de figeage,
*BLK_REQ_SET_AFTR_SHF* : requête d'initialisation de la deuxième requête de figeage,
*BLK_REQ_DRG_SHF* : première requête de figeage,
*CRT_SHF_FLAG* : information de changement d'état,
*GBX_TGT_RAW* : consigne d'état avant la requête de figeage,
*VEH_SPEED* : vitesse de déplacement du véhicule.

Dans cet exemple, il est supposé que la puissance *PWT_SP* au GMP est supérieure au seuil *PWT_SP_THD* impliquant la réalisation d'un nouvel état (changement d'état).

A T0, la transmission est sur le rapport R4. La cible d'état après figeage *GBX_TGT_CS* change à T1. La cible d'état de la chaîne cinématique avant et après la requête de figeage (*GBX_TGT_RAW*^{.}et *GBX_TGT_CS*) sont alors passées sur le cinquième rapport R5, à cause de l'augmentation de la vitesse véhicule *VEH_SPD.* La transmission réalise l'état cible *GBX_TGT_CS* = R5. Pendant cette réalisation *CRT_SHF_FLAG* est à 1. La puissance requise au GMP, *PWT_SP* est supérieure au seuil *PWT_SP_THD.* La requête de figeage *BLK_REQ_DRG_SHF* est active depuis le changement de cible avant figeage *GBX_TGT_RAW. Elle* implique l'activation de la requête de figeage finale *BLK_REQ_SHF.*

A T2, la cible avant figeage *GBX_TGT_RAW* repasse sur R4 en raison de la décélération du véhicule pendant la réalisation de l'état R5. La requête de figeage *BLK_REQ_SHF* étant active, l'état cible après figeage *GBX_TGT_CS* reste sur R5. La réalisation de cet état par la transmission suit son cours.

A T3, la transmission a finalisé la réalisation du changement d'état sur R5. *CRT_SHF_FLAG* repasse à 0. La requête de figeage de cible après réalisation *BLK_REQ_AFTR_SHF* est initialisée par la requête *BLK_REQ_SET_AFTR_SHF*, du fait
- qu'un figeage *BLK_REQ_DRG_SHF* était actif pendant la réalisation, et
- que l'état avant *GBX_TGT_RAW* et après figeage *GBX_TGT_CS* sont différents, et
- que la vitesse du véhicule *VEH SPD* est inférieure à celle du changement d'état initial (R4 ->R5).

La requête de figeage après réalisation *BLK_REQ_AFTR_SHF* est active à partir de T3, maintenant le statut actif de la requête de figeage finale BLK_REQ_SHF.

Entre T3 et T4, la requête de figeage *BLK_REQ_SHF* est active. Elle permet au véhicule de réaccélérer pour retrouver la vitesse *VEH_SPD* qu'il avait à T1, au début du changement. L'état cible avant figeage GBX_TGT_RAW devient à nouveau égal à l'état après figeage *GBX_TGT_CS.*

A T5, les états cible avant et après figeage sont égaux depuis une durée suffisamment longue (paramètre réglable), pour que la requête de figeage après réalisation *BLK_REQ_AFTR_SHF* soit désactivée par la requête *BLK_REQ_RST_AFTR_SHF.* La désactivation de *BLK_REQ_AFTR_SHF* désactive la requête finale de figeage *BLK_REQ_SHF.*

Le procédé de suppression de pompage proposé présente de nombreux avantages. Il est parfaitement transversal, de sorte qu'il peut être mis en oeuvre sur tout véhicule hybride, ou conventionnel, avec une transmission automatique à rapports discrets.

## Revendications

1. Procédé de suppression du pompage d'une transmission automatique de groupe motopropulseur de véhicule, **caractérisé en ce qu'**une consigne d'état (*GBX_TG_RAW*) de la chaîne cinématique imposée à la transmission peut être figée sur une cible d'état *(GBX_TG_CS)* par :
- une première requête de figeage au cours de la réalisation de cette consigne par la transmission (*BLK_REQ_DRG_SHF*), si la vitesse de déplacement du véhicule diminue pendant cette réalisation, alors que le niveau de performance requis au groupe motopropulseur est supérieur à un seuil défini, ou
- par une deuxième requête de figeage (*BLK_REQ_AFTR_SHF*)à la fin de la réalisation de la consigne *(GBX_TG_CS),* si la vitesse de déplacement du véhicule à cet instant est inférieure à sa vitesse de déplacement lors du changement initial de la consigne, et que le niveau de performance requis au groupe motopropulseur *(PWT_SP)* est toujours supérieur à un seuil défini *(PWT_SP_THD).*

2. Procédé de suppression du pompage selon la revendication 1, **caractérisé en ce que** la première requête de figeage est effective tant que le niveau de performance requis est supérieur au seuil de performance défini.

3. Procédé de suppression de pompage selon la revendication 1 ou 2, **caractérisé en ce que** la deuxième requête de figeage ( *BLK_REQ_AFTR_SHF*) est effective si l'ensemble des paramètres suivants sont vérifiés :
- une première requête de figeage pendant la réalisation de l'état cible ( *BLK_REQ_DRG_SHF*) est encore active à la fin de la réalisation de la consigne *(GBX_TGT_CS),*
- le niveau de performance requis *(PWT_SP)* est toujours supérieur au seuil (*PWT_SP*_*THD*),
- la vitesse du véhicule *(VEH_SPD)* à la fin de la réalisation de l'état cible (*GBX_TGT_CS*) est inférieure à la vitesse véhicule observée au moment du changement initial de la consigne d'état chaîne cinématique (*GBX_TGT_CS*)*,* et celle-ci est différente de la consigne d'état de la chaîne cinématique avant figeage (*GBX_TGT_RAW*).

4. Procédé de suppression de pompage selon la revendication 3, **caractérisé en ce que** la deuxième requête de figeage (*BLK_REQ_AFTR_SHF*) est initialisée par une requête spécifique (*BLK_REQ_SET_AFTR_SHF)* après un changement d'état, si l'ensemble de ces paramètres sont vérifiés.

5. Procédé de suppression de pompage selon la revendication 3 ou 4, **caractérisé en ce que** le figeage de la cible (*GBX_TGT_CS) est interrompu par une* requête de désactivation (*BLK_REQ_RST_AFTR_SHF),* qui devient effective dès qu'au moins une des conditions suivantes est satisfaite :
- la cible d'état avant figeage (*GBX_TGT_RAW)* est la même que l'état réalisé *(GBX_TGT_CS),*
- la différence entre la vitesse du véhicule (*VEH_SPD)* et la vitesse du véhicule observée au moment de l'initialisation de la requête de blocage après changement (*BLK_REQ_AFTR_SHF)*, devient inférieure à un seuil défini (*VEH_SPD_THD),*
- la durée de la seconde phase de blocage devient supérieure à un seuil qui est fonction de la vitesse véhicule (*VEH_SPD)* et du niveau des efforts résistifs additionnels (*ADD_RES_FORC),* ou
- le niveau de performance requis (*PWT_SP)* devient inférieur à ( *PWT_SP_THD).*

## Patentansprüche

1. Verfahren zur Unterdrückung des Pendelns eines Automatikgetriebes einer Fahrzeug-Antriebseinheit, **dadurch gekennzeichnet, dass** ein dem Getriebe vorgegebener Zustands
sollwert (GBX_TG_RAW) der kinematischen Kette auf einem Zustandsziel (GBX_TG_CS) eingefroren werden kann durch:
- eine erste Einfrieranforderung während der Erzeugung dieses Sollwerts durch das Getriebe (BLK_REQ_DRG_SHF), wenn die Fahrgeschwindigkeit des Fahrzeugs während dieser Erzeugung abnimmt, während das von der Antriebseinheit geforderte Leistungsniveau höher ist als eine definierte Schwelle, oder
- durch eine zweite Einfrieranforderung (BLK_REQ_AFTR_SHF) am Ende der Erzeugung des Sollwerts (GBX_TG_CS), wenn die Fahrgeschwindigkeit des Fahrzeugs zu diesem Zeitpunkt niedriger ist als seine Fahrgeschwindigkeit bei der ursprünglichen Änderung des Sollwerts, und das von der Antriebseinheit (PWT_SP) geforderte Leistungsniveau immer noch höher ist als eine definierte Schwelle (PWT_SP_THD).

2. Pendelunterdrückungsverfahren nach Anspruch 1, **dadurch gekennzeichnet, dass** die erste Einfrieranforderung wirksam ist, so lange das geforderte Leistungsniveau höher ist als die definierte Leistungsschwelle.

3. Pendelunterdrückungsverfahren nach Anspruch 1 oder 2, **dadurch gekennzeichnet, dass** die zweite Einfrieranforderung (BLK_REQ_AFTR_SHF) wirksam ist, wenn die Gesamtheit der folgenden Parameter überprüft ist:
- eine erste Einfrieranforderung während der Erzeugung des Zielzustands (BLK_REQ_DRG_SHF) ist am Ende der Erzeugung des Sollwerts (GBX_TGT_CS) noch aktiv,
- das geforderte Leistungsniveau (PWT_SP) ist immer noch höher als die Schwelle (PWT_SP_THD),
- die Geschwindigkeit des Fahrzeugs (VEH_SPD) am Ende der Erzeugung des Zielzustands (GBX_TGT_CS) ist niedriger als die Fahrzeuggeschwindigkeit, die im Moment der ursprünglichen Änderung des Zustandssollwerts der kinematischen Kette (GBX_TGT_CS) beobachtet wird, und dieser anders ist als der Zustandssollwert der kinematischen Kette vor dem Einfrieren ( GBX_TGT_RAW).

4. Pendelunterdrückungsverfahren nach Anspruch 3, **dadurch gekennzeichnet, dass** die zweite Einfrieranforderung (BLK_REQ_AFTR_SHF) durch eine spezifische Anforderung (BLK_REQ_SET_AFTR_SHF) nach einer Zustandsänderung initialisiert wird, wenn die Gesamtheit dieser Parameter überprüft ist.

5. Pendelunterdrückungsverfahren nach Anspruch 3 oder 4, **dadurch gekennzeichnet, dass** das Einfrieren des Ziels (GBX_TGT_CS) durch eine Deaktivierungsanforderung (BLK_REO_RST_AFTR_SHF) unterbrochen wird, die wirksam wird, sobald mindestens eine der folgenden Bedingungen erfüllt ist:
- das Zustandsziel vor dem Einfrieren (GBX_TGT_RAW) ist das gleiche wie der hergestellte Zustand (GBX_TGT_CS),
- der Unterschied zwischen der Geschwindigkeit des Fahrzeugs (VEH_SPD) und der zum Zeitpunkt der Initialisierung der Blockieranforderung nach Änderung (BLK_REQ_AFTR_SHF) beobachteten Geschwindigkeit wird niedriger als eine definierte Schwelle (VEH_SPD_THD),
- die Dauer der zweiten Blockierphase wird größer als eine Schwelle, die von der Fahrzeuggeschwindigkeit (VEH_SPD) und vom Niveau der zusätzlichen Widerstandskräfte (ADD_RES_FORC) abhängt, oder
- das geforderte Leistungsniveau (PWT_SP) wird niedriger als (PWT_SP_THD).

## Claims

1. A method for eliminating hunting in an automatic transmission of a vehicle powertrain, **characterized in that** a state setpoint *(GBX_TG_RAW)* of the drivetrain, which setpoint is imposed on the transmission, can be frozen on a state target *(GBX_TG_CS)* by:
- a first request to freeze during implementation of this setpoint by the transmission (*BLK_REQ_DRG_SHF*), if the vehicle speed decreases during this implementation, while the level of performance required of the powertrain is above a defined threshold, or
- by a second request to freeze *(BLK_REQ_AFTR_SHF)* at the end of implementation of the setpoint *(GBX_TG_CS),* if the vehicle speed at this moment is below its speed of travel during the initial change of setpoint, and also the level of performance required of the powertrain (*PWT_SP)* is still above a defined threshold (*PWT_SP_THD).*

2. The method for eliminating hunting as claimed in claim 1, **characterized in that** the first request to freeze is effective as long as the level of performance required is above the defined performance threshold.

3. The method for eliminating hunting as claimed in claim 1 or 2, **characterized in that** the second request to freeze *(BLK_REQ_AFTR_SHF)* is effective if all of the following parameters are satisfied:
- a first request to freeze during implementation of the target state (*BLK_REQ_DRG_SHF*) is still active at the end of the implementation of the setpoint (*GBX_TGT_CS),*
- the required performance level (*PWT_SP)* is still above the threshold (*PWT_SP_THD)*,
- the vehicle speed (*VEH_SPD)* at the end of implementation of the target state (*GBX_TGT_CS)* is below the vehicle speed observed at the moment of the initial change in drivetrain state setpoint (*GBX_TGT_CS)*, and the latter is different than the drivetrain state setpoint before freezing (*GBX_TGT_RAW).*

4. The method for eliminating hunting as claimed in claim 3, **characterized in that** the second request to freeze (*BLK_REQ_AFTR_SHF)* is initialized by a specific request (*BLK_REQ_SET_AFTR_SHF)* after a change in state if all of these parameters are satisfied.

5. The method for eliminating hunting as claimed in claim 3 or 4, **characterized in that** the freezing of the target (*GBX_TGT_CS)* is interrupted by a deactivation request (*BLK_REO_RST_AFTR_SHF)* which becomes effective as soon as at least one of the following conditions is met:
- the state target before freezing (*GBX_TGT_RAW)* is the same as the state implemented (*GBX_TGT_CS)*,
- the difference between the vehicle speed (*VEH_SPD)* and the vehicle speed observed at the moment of initialization of the request to block after change (*BLK_REQ_AFTR_SHF)* drops below a defined threshold (*VEH_SPD_THD)*,
- the duration of the second blocking phase increases above a threshold which is dependent on the vehicle speed (*VEH_SPD)* and on the level of the additional resistive forces (*ADD_RES_FORC)*, or
- the required level of performance *(PWT_SP)* drops below (*PWT_SP_THD)*.
